# EUROPÄISCHE PATENTSCHRIFT

(11) **EP 1 792 144 B1**
(45) Veröffentlichungstag und Bekanntmachung des Hinweises auf die Patenterteilung: **25.02.2015**
(21) Anmeldenummer: 05779105.5
(22) Anmeldetag: 07.09.2005
(51) Int. Cl.: G01F 1/60, G01F 25/00

(54) **VERFAHREN ZUM ÜBERPRÜFEN EINES MAGNETISCH-INDUKTIVEN DURCH FLUSSMESSERS**
METHOD FOR TESTING A MAGNETIC INDUCTIVE FLOW METER
PROCEDE DE CONTROLE D'UN DEBITMETRE MAGNETO-INDUCTIF

(30) Priorität: 22.09.2004 DE 102004046238
(43) Veröffentlichungstag der Anmeldung: 06.06.2007
(73) Patentinhaber: Endress+Hauser Flowtec AG, 4153 Reinach (CH)
(72) Erfinder: BUDMIGER, Thomas, CH-4107 Ettingen (CH)
(74) Vertreter: Andres, Angelika Maria
(86) Internationale Anmeldenummer: PCT/EP2005/054427
(87) Internationale Veröffentlichungsnummer: WO 2006/032612

(56) Entgegenhaltungen:
- EP-A- 0 969 268
- EP-A- 1 108 988
- EP-A- 1 460 394
- WO-A-2005/012842
- US-A1- 2002 112 525
- US-B1- 6 763 729

## Beschreibung

Die Erfindung betrifft ein Verfahren zum Überprüfen eines magnetisch-induktiven Durchflußmessers mit einem Meßrohr zum Führen eines zu messenden Fluids und mit einem Magnetfeld-System, das wenigstens eine zumindest zeitweise von einem Erregerstrom durchflossene Feldspule zum Erzeugen eines das Fluid zumindest teilweise senkrecht zu einer Strömungsrichtung durchsetzenden Magnetfelds aufweist.

Zur Messung eines elektrisch leitfähigen Fluids werden oftmals Durchflussmesser mit einem magnetisch-induktiven Durchflussaufnehmer eingesetzt. Im Folgenden wird der Einfachheit halber nur von Durchflußaufnehmern bzw. Durchflußmessern gesprochen. Mit magnetisch-induktiven Durchflußmessern läßt sich bekanntlich der Volumendurchfluß einer elektrisch leitenden Flüssigkeit, die in einer Rohrleitung fließt, messen und in einen entsprechenden Meßwert abbilden; es wird also per Definition das pro Zeiteinheit durch einen Rohrquerschnitt fließende Volumen der Flüssigkeit gemessen. Aufbau und Wirkungsweise magnetisch-induktiver Durchflussmesser sind dem Fachmann an und für sich bekannt und beispielsweise in der DE-A 43 26 991, der EP-A1 275 940, der EP-A 12 73 892, der EP-A 1 273 891, der EP-A 814 324, der EP-A 770 855, der EP-A 521 169, der US-A 60 31 740, der US-A 54 87 310, der US-A 52 10 496, der US-A 44 10 926, der US-A 2002/0117009 oder der WO-A 01/90702 ausführlich und detailliert beschrieben.

Die EP 0 969 268 A1 offenbart ein Verfahren zum Regeln des in einer Spulenanordnung fließenden Spulenstroms. Die Anstiegsdauer des Spulenstroms wird derart geregelt, dass nach dem Erreichen des Strommaximums kein weiterer Anstieg des Spulenstroms erfolgt.

Durchflußaufnehmer der beschriebenen Art weisen üblicherweise jeweils ein nicht-ferromagnetisches Meßrohr auf, das in die Rohrleitung fluiddicht, z.B. mittels Flanschen oder Verschraubungen, eingesetzt wird. Eine mittels eines quer zu einer Strömungsrichtung des zu messenden Fluids ausgerichtetes Magnetfeld im strömenden Fluid aufgrund von Ladungstrennungen erzeugte elektrische Spannung wird mittels wenigstens zweier Meßelektroden als eine Meßspannung abgegriffen und in der Meßgerät-Elektronik zu einem entsprechenden Meßwert, beispielsweise einem Volumendurchfluß-Meßwert, weiterverarbeitet. Der das Fluid berührende Teil des Meßrohrs ist im Allgemeinen elektrisch nicht-leitend, damit die Meßspannung, die nach dem Faraday'schen Induktionsgesetz von dem das Meßrohr zumindest teilweise durchsetzenden Magnetfeld im Fluid induziert wird, nicht kurzgeschlossen wird. Metall-Meßrohre sind daher üblicherweise innen mit einer elektrisch nicht-leitenden Schicht, z.B. aus Hartgummi, Polyfluorethylen etc., versehen und auch im Allgemeinen nicht-ferromagnetisch. Bei vollständig aus einem Kunststoff oder aus einer Keramik, insb. aus Aluminiumoxid-Keramik, bestehenden Meßrohren ist die elektrisch nicht-leitende Schicht demgegenüber nicht erforderlich.

Bei magnetisch-induktiven Durchflußaufnehmern wird das für die Messung erforderliche Magnetfeld von einem entsprechenden Magnetfeld-System erzeugt, das eine eine Induktivität L aufweisende Spulenanordnung mit zumeist wenigstens zwei Feldspulen, entsprechenden Spulenkernen und/oder Polschuhen für die Feldspulen und ggf. die Spulenkerne außerhalb des Meßrohrs verbindende magnetisch-leitfähige Führungsbleche enthält. Allerdings sind auch Magnetfeld-Systeme mit einer einzigen Feldspule bekannt. Die Spulenkerne und/oder Polschuhe des Magnetsystems bestehen meistens aus einem weich-magnetischen Material. Es sind aber auch schon Magnetsysteme mit ferromagnetischen Spulenkernen beschrieben worden. Das Magnetfeld-System ist üblicherweise direkt am Meßrohr angeordnet.

Zum Erzeugen des Magnetfelds wird ein von einer entsprechenden Meßgeräte-Elektronik gelieferter Spulenstrom in der Spulenanordnung fließen gelassen. Damit das von dem Magnetfeld-System erzeugte Magnetfeld möglichst homogen ist, sind die Feldspulen im häufigsten und einfachsten Fall identisch zueinander und elektrisch gleichsinnig in Serie geschaltet, so daß sie im Betrieb von demselben Erregerstrom durchflossen werden können. Es ist jedoch auch schon beschrieben worden, die Spulen abwechselnd gleich- bzw. gegensinnig von einem Erregerstrom durchfließen zu lassen, um dadurch beispielsweise die Viskosität von Flüssigkeiten und/oder einen Turbulenzgrad der Strömung ermitteln zu können, vgl. hierzu auch die EP-A1 275 940, die EP-A 770 855 oder die DE-A 43 26 991. Der vorgenannte Erregerstrom wird von einer Betriebselektronik erzeugt; er wird auf einen konstanten Stromwert von z.B. 85 mA geregelt, und seine Stromrichtung wird periodisch umgekehrt. Die Stromrichtungsumkehr wird dadurch erreicht, dass die Spulen in einer sogenannten T-Schaltung oder einer sogenannten H-Schaltung liegen. Zur Stromregelung und -richtungsumkehr wird auf die US-A 44 10 926 oder die US-A 60 31 740 verwiesen.

Der Spulenstrom ist bei modernen Durchflußaufnehmern üblicherweise ein getakteter bipolarer Rechteck-Wechselstrom, der in einer ersten Halbperiode einer Periodendauer positiv mit einem konstanten ersten Strom-Endwert ist und danach durch Umschalten in einer zweiten Halbperiode der Periodendauer negativ mit einem konstanten, zum ersten Strom-Endwert im Wesentlichen betragsgleichen zweiten Strom-Endwert ist. Die Spulenanordnung kann z.B. eine Einzelspule sein, wenn der magnetisch-induktive Durchflussaufnehmer als Strömungssonde dient, vgl. die US-A 35 29 591, oder sie kann z.B. auch aus zwei Teilspulen bestehen, die diametral einander gegenüberliegend am Meßrohr angeordnet sind. In der US-B 67 63 729, US-A 60 31 740 oder der US-A 44 10 926 ist eine Schaltungsanordnung zur Erzeugung eines solchen Spulenstroms beschrieben. Diese Schaltungsanordnung umfaßt eine den Spulenstrom treibende Energieversorgung sowie eine als H-Schaltung ausgeführte Brückenschaltung für die Modulation des Spulenstroms, wobei die Spulenanordnung in einem Querzweig der Brückenschaltung liegt. Ferner ist in der US-A 60 31 740 wie auch in der US-A 44 10 926 eine Schaltungsanordnung zur Erzeugung eines Spulenstroms gezeigt, die anstelle der als H-Schaltung ausgeführten Brückenschaltung eine als T-Schaltung ausgelegte Brückenschaltung für die Spulenanordnung aufweist. Ferner ist in der US-A 42 04 240 eine Schaltungsanordnung mit einer internen Energieversorgung zur Erzeugung des Spulenstroms eines magnetisch-induktiven Durchflussaufnehmers beschrieben, die eine Spannung abgibt, von der ein Spannungsanfangswert in jeder erwähnten Halbperiode während einer Anstiegsdauer des Spulenstroms - als eine erste Teilperiode - höher ist als ein Spannungsendwert während einer zweiten Teilperiode - als Rest der Halbperiode.

Die erwähnte induzierte Spannung entsteht zwischen mindestens zwei galvanischen, also von der Flüssigkeit benetzten Meßelektroden oder zwischen mindestens zwei kapazitiven, also z.B. innerhalb der Rohrwand des Meßrohrs angeordneten, Meßelektroden, wobei jede der Elektroden für sich ein Potential abgreift. Im häufigsten Fall sind die Meßelektroden diametral einander gegenüberliegend so angeordnet, dass ihr gemeinsamer Durchmesser senkrecht zur Richtung des Magnetfelds und somit senkrecht zum Durchmesser ist, auf dem die Spulenanordnungen liegen. Die induzierte Spannung wird verstärkt und mittels einer Auswerteschaltung zu einem Meßsignal aufbereitet, das registriert, angezeigt oder seinerseits weiterverarbeitet wird. Entsprechende Meß-Elektroniken sind dem Fachmann ebenfalls bekannt, beispielsweise aus der EP-A 814 324, der EP-A 521 169 oder der WO-A 01/90702.

Neben der eigentlichen Meßfunktion weisen moderne magnetisch-induktive Durchflußmesser oftmals auch übergeordnete Diagnosefunktionen auf, mittels denen der Durchflußmesser im Betrieb einem Selbsttest unterzogen werden kann. Derartige Diagnosefunktionen sind beispielsweise in der bereits erwähnten US-B 67 63 729 oder der EP-A 12 17 337 beschrieben.

Bei einem solchen Selbsttest kann zum einen eine Prüfung dahingehend erfolgen, ob alle Komponenten des Meßgeräts voll funktionsfähig sind, und zum anderen dahingehend, ob der Meßbetrieb vorschriftsmäßig abläuft. Ist das Ergebnis eines solchen Selbsttests positiv, liegen also keine Fehlfunktionen des Meßgeräts bzw. des Meßbetriebs vor, so ist gewährleistet, dass das von dem Meßgerät ausgegebene Meßergebnis - natürlich innerhalb vorgegebener Fehlertoleranzen - dem aktuell tatsächlich vorliegenden Wert entspricht. Im Besonderen können im Rahmen eines solchen Selbsttests einzelne Komponenten und Bauteile des Meßgeräts z.B. mittels Impedanzmessungen oder Messungen des ohmschen Widerstands bzw. der Leitfähigkeit auf ihre Funktionsfähigkeit hin überprüft werden. Ferner sind auch z. B. die Einstelldaten bei der Eingabe auf Plausibilität zu überprüfen. Dabei werden z.B. Eingaben, die außerhalb des zulässigen Bereichs liegen, abgelehnt und nicht übernommen. Unabhängig von der Prüfung der Einstelldaten bei der Eingabe werden die aus den Einstelldaten berechneten Daten, die direkt den Meßbetrieb des Meßgeräts steuern, noch einmal auf ihre erlaubten Grenzen hin überprüft. Diese Überprüfung erfolgt vor Aufnahme des Meßbetriebs, so dass bei Auftreten eines Fehlers bezüglich der Einstelldaten eine entsprechende Fehler-Meldung ausgegeben werden kann und die Messung entsprechend nicht durchgeführt wird.

Bei dem in der EP-A 12 17 337 beschriebenen Meßgerät wird vorgeschlagen den Erregerstrom in seiner Stromstärke variierbar zu halten. Es wird sodann vorgeschlagen die dem Erregerstrom entsprechende Meßspannung zu messen und aufgrund einer einen Schwellwert übersteigenden Abweichung der bei verschiedenen Stromstärken gemessenen Meßspannungshöhen von der durch die Funktion zwischen dem Erregerstrom und der Meßspannung für die Meßspannung erwartete Spannungsghöhe zu ermitteln und eine Fehlfunktion des Meßbetriebs des Meßgeräts festzustellen. Es wird somit die als bekannt vorausgesetzte und für den Meßbetrieb grundlegende Funktion zwischen dem Erregerstrom und der Meßspannung zur Prüfung des Meßbetriebs verwendet. Im einfachsten Fall kann es sich bei dieser Funktion zwischen dem Erregerstrom und der Meßspannung um eine lineare Funktion handeln, so daß eine Fehlfunktion des Meßbetriebs des Meßgeräts einfach durch ein Abweichen der bei voneinander verschiedenen Stromstärken erzielten Meßspannunghöhen um mehr als einen Schwellwert von einem linearen Verlauf feststellbar ist.

Demgegenüber wird bei dem in der US-B 67 63 729 beschriebenen Durchflußmesser die Überprüfung dadurch vorgenommen, daß man nach der Änderung der Stromrichtung mindestens einen Parameter des Anstieges des Stromes ermittelt und diesen mit einem Referenzwert vergleicht. Dabei wird als Parameter eine Zeitspanne verwendet, die zwischen zwei vorbestimmten Stromwerten verstreicht. Da der Anstieg des Stromes einer vorbestimmten physikalischen Gesetzmässigkeit genügt, in der Regel einer e-Funktion, reicht es aus, die Anstiegszeit zwischen zwei Werten zu ermitteln, um eine zuverlässige Aussage über den Stromanstieg an sich zu gewinnen. Alternativ oder zusätzlich dazu kann als Parameter eine Zeitspanne verwendt werden, die zwischen dem Umschalten der Stromrichtung und dem Erreichen eines vorbestimmten Stromwertes verstreicht. Der Zeitpunkt des Umschaltens ist sehr genau zu ermitteln. Beispielsweise läßt sich das Umschaltsignal auch als Triggersignal für einen Zeitzähler verwenden. Der vorbestimmte Stromwert kann beispielsweise in der Nähe des maximalen Stromwertes liegen, d.h. in der Nähe der Stromstärke, die sich nach dem Einschwingen des Magnetfelds auf einen für die Messung geeigneten konstanten Wert einstellt. Weiter wird in der US-B 67 63 729 nach dem Umschalten eine erhöhte Spannung verwendt. Wie bereits in der US-A 60 31 740 offenbart, beschleunigt eine solche Überspannung den Aufbau des Magnetfeldes, da sie den Stromanstieg erhöht, und ermöglicht somit, daß die eigentliche Messung wieder schneller vorgenommen werden kann.

Der Schwellen- oder Referenzwert, bei dessen Übersteigen eine Fehlfunktion des Meßbetriebs des Meßgeräts feststellbar ist, kann im Durchflussmesser selbst zu einem früheren Zeitpunkt ermittelt werden. Beispielsweise kann bei der Inbetriebnahme der gewünschte Parameter festgestellt und als Referenzwert in einem in der Meßgerät-Elektronik vorgesehenen Mikrocomputer als Digitalwert abgelegt werden, so daß er für künftige Überprüfungsvorgänge zur Verfügung steht. Damit bekommt jeder Durchflußmesser einen individuellen Referenzwert. Der Referenzwert für die Abweichung kann auf unterschiedliche Weise festgelegt sein, z. B. als konstanter absoluter Wert. Ferner ist es möglich, den Schwellenwert als prozentualer Anteil vom Meßbereichsendwert für die Meßspannung festzulegen. Auf diese Weise läßt es sich erreichen, durch einmaliges Festlegen des Schwellenwerts - nämlich als prozentualen Anteil vom Meßbereichsendwert für die Ausgangsgröße - eine Einstellung des Meßgeräts zu erzielen, die für alle einstellbaren Meßbereiche des Meßgeräts verwendbar ist.

Bei der Feststellung einer Fehlfunktion des Meßbetriebs des Meßgeräts sind im Übrigen verschiedene Vorgänge möglich. Beispielsweise kann der Meßbetrieb des Meßgeräts beendet werden, da ja keine verläßlichen Meßergebnisse mehr erzielt werden. Alternativ oder zusätzlich können bei der Feststellung einer Fehlfunktion des Meßbetriebs aber auch optische und/oder akustische Warnmeldungen ausgegeben werden.

Trotz dieser aus dem Stand der Technik schon bekannten Verfahren für Selbsttests von Meßgeräten besteht ein Bedarf dahingehend, weitere Verfahren für Selbsttests bereitzustellen, mit denen noch genauer festgestellt werden kann, ob eine Fehlfunktion des Meßbetriebs oder des Meßgeräts selbst vorliegt.

Insbesondere kann nämlich der Fall auftreten, daß einzelne Komponenten des Meßgeräts nur gering von ihren Sollwerten abweichen, so daß jede einzelne Komponente im Rahmen eines Selbsttests als voll funktionsfähig eingestuft wird, jedoch im Zusammenspiel der Komponenten ein solcher Meßbetrieb generiert wird, der fehlerhaft ist und bei dem die angegebene Genauigkeit der Meßwerte nicht gewährleistet werden kann.

Darüber hinaus hat es sich ferner gezeigt, daß aufgrund dessen, daß im Magnetsystem aufgrund des Umschaltens und des Anstiegs des Spulenstroms Wirbelströme induziert werden, die, wie auch in der US-A 60 31 740 diskutiert, verhindern, daß der Anstieg des Magnetfelds exakt dem Anstieg des Spulenstroms folgt, wie dies ohne Spulenkerne und/oder Polschuhe der Fall wäre. Vielmehr wird der Anstieg des Magnetfelds gegenüber dem des Spulenstroms verzögert und verflacht.

Im Idealfall entspricht der Stromverlauf in der Spulenanordnung dem Verlauf des Magnetfelds. Aufgrund von Wirbelströmen, die während des Umschaltens des Magnetfeldes in den Polschuhen und Kernen der Spulenanordnung entstehen, treten in der Realität Abweichungen vom Idealfall auf. Der außerhalb der Spulenanordnung gemessene Spulenstrom entspricht daher der Summe des in der Spule fließenden Stroms und des durch die Wirbelströme erzeugten Stroms. Wird der außerhalb der Spulenanordnung gemessene Strom als Regelgröße verwendet, ist folglich zwar der Strom, nicht aber das Magnetfeld konstant. Dies gilt solange, wie die Wirbelströme nicht abgeklungen sind.

Diese nachteilige Wirkung der Wirbelströme tritt auch bei und trotz der erwähnten Spannungsüberhöhung auf. Die Wirkung der Wirbelströme läßt sich dadurch veranschaulichen, daß angenommen wird, daß der (Spulen-) Induktivität eine Wirbelstrom-Quelle parallelgeschaltet ist, deren Strom sich mit dem Strom in der Induktivität zum gesamten Erregerstrom addiert. Somit ist der Spannungsabfall an einem in Reihe zur Induktivität der Feldspule liegenden Widerstand zwar ein Maß für den Erregerstrom, nicht jedoch für den mit dem Magnetfeld tatsächlich korrespondierenden, wahren Feldstrom in der Induktivität. Dies ist aber, wie auch in der EP-A 14 60 394 diskutiert, für eine exakte Regelung des Magnetfelds erforderlich und insoweit auch für die Überprüfung des Magnetfeld-Systems von Vorteil.

Es ist daher eine Aufgabe der Erfindung, ein Verfahren anzugeben, mit dem ein Durchflußmesser der beschriebenen Art während des laufenden Meßbetriebs überprüft werden kann und insofern Fehlfunktionen des Meßgeräts sehr genau und auf einfache Weise erfaßt und ggf. auch lokalisiert werden können.

Zur Lösung der Aufgabe besteht die Erfindung in einem Verfahren zum Überprüfen eines magnetisch-induktiven Durchflußmessers mit einem Meßrohr zum Führen eines zu messenden Fluids und mit einem Magnetfeld-System, das wenigstens eine zumindest zeitweise von einem Erregerstrom durchflossene Feldspule zum Erzeugen eines das Fluid zumindest teilweise senkrecht zu einer Strömungsrichtung durchsetzenden Magnetfelds aufweist, welches Verfahren folgende Schritte umfaßt:
- Ändern einer den Erregerstrom zumindest zeitweise treibenden Spannung zu einem ersten Zeitpunkt, von einer momentanen, insb. von Null verschiedenen, ersten Spannungshöhe auf eine, insb. konstante oder konstant-geregelte, zweite Spannungshöhe zum Erhöhen einer Stromstärke des von der Spannung getriebenen und in der wenigstens einen Feldspule fließenden Erregerstroms auf einen maximalen Stromwert, wobei die zweite Spannungshöhe größer gewählt wird als die erste Spannungshöhe,
- Ändern der den Erregerstrom momentan treibenden Spannung zu einem zweiten Zeitpunkt von der zweiten Spannungshöhe auf eine, insb. konstante oder konstant-geregelte, dritte Spannungshöhe zum Absenken der Stromstärke des momentan in der wenigstens einen Feldspule fließenden Erregerstroms vom maximalen Stromwert auf einen für den Erregerstrom vorgegebenen, insb. konstanten, Strom-Endwert wobei die dritte Spannungshöhe kleiner gewählt wird als die zweite Spannungshöhe

- Erfassen des Erregerstroms zumindest zeitweise zum Ermitteln eines dritten Zeitpunktes der mit einem Erreichen des Strom-Endwerts korrespondiert,
- Ermitteln einer ersten Zeitkonstante für das Magnetfeld-System, die mit einer zwischen dem zweiten Zeitpunkt und dem dritten Zeitpunkt liegenden Zeitspanne korrespondiert, und/oder Ermitteln einer zweiten Zeitkonstante für das Magnetfeld-System, die mit einer zwischen dem ersten Zeitpunkt und dem dritten Zeitpunkt liegenden Zeitspanne korrespondiert, und
- Vergleichen der Ermittelten ersten Zeitkonstante mit einem vorgegebenen ersten Referenzwert und/oder Vergleichen der ermittelten zweiten Zeitkonstante mit einem vorgegebenen zweiten Referenzwert zum Ermitteln eines einen momentanen Betriebszustand des Durchflußmessers repräsentierenden Diagnosewerts.

Eine erste Ausgestaltung des erfindungsgemäßen Verfahrens sieht vor, daß die dritte Spannungshöhe kleiner gewählt ist als die erste Spannunghöhe.

Eine zweite Ausgestaltung des erfindungsgemäßen Verfahrens beinhaltet, daß die den Erregerstrom zumindest zeitweise treibende Spannung derart geändert wird, daß deren zweite Spannungshöhe während einer zwischen dem ersten Zeitpunkt und dem zweiten Zeitpunkt liegenden Zeitspanne zumindest zeitweise, insb. auch unmittelbar vor dem zweiten Zeitpunkt, im Wesentlichen konstant ist.

Eine dritte Ausgestaltung des erfindungsgemäßen Verfahrens sieht vor, das wenigstens eine Feldspule der Spulenanordnung zum Einstellen der Spannung auf die dritte Spannungshöhe zumindest zeitweise kurzgeschlossen wird.

Ein Grundgedanke der Erfindung besteht darin, den als in sehr starkem Maße vom momentanen Betriebszustand des Durchflußmessers, insb. aber vom momentanen Zustand des Magnetfeld-Systems abhängig und insoweit als sehr empfindlich auf Veränderungen im Magnetfeld-System reagierend erkannten dritten Zeitpunkt - gemeint ist hier im besonderen die von einem geeigneten Referenzzeitpunkt gemessene Zeitspanne - des eingangs beschriebenen Verfahrens zur Erregerstrom- bzw. Magnetfeld-Einstellung zur Überwachung des Durchflußmessers, insb. des Magnetfeld-Systems, zu verwenden. Die Erfindung basiert dabei u.a. auf der Erkenntnis, daß das Fehler im Magnetfeld-System einen signifikanten Einfluß auf die beiden erwähnten Zeitspannen der Regelung für den Erregerstrom haben.

Das Verfahren der Erfindung und weitere Vorteile werden nun anhand von in den nachfolgenden Figuren dargestellten Zeitdiagrammen und schematisierten Schaltbildern eines magnetisch-induktiven Durchflußmessers näher erläutert.
- Fig. 1, 2: zeigen schematisch bzw. in der Form eines Blockschaltbilds einen für den Ablauf des Verfahrens der Erfindung geeignetes - hier magnetisch-induktiver Durchflußmesser ausgebildetes - Prozeß-Meßgerät,
- Fig. 3: zeigt schematisch ein Zeitdiagramm eines im Betrieb des Prozeß-Meßgeräts gemäß Fig. 1 und 2 fließenden Erregerstroms,
- Fig. 4: zeigt ein schematisches Schaltbild eines ersten Ausführungsbeispiels mit einer H-Schaltung,
- Fig. 5: zeigt ein schematisches Schaltbild eines zweiten Ausführungsbeispiels mit einer H-Schaltung,
- Fig. 6: zeigt ein schematisches Schaltbild eines ersten Ausführungsbeispiels mit einer T-Schaltung,
- Fig. 7: zeigt ein schematisches Schaltbild eines zweiten Ausführungsbeispiels mit einer T-Schaltung,
- Fig. 8: zeigen Kurvenverläufe des Spulenstroms und der magnetischen Induktion bzw. der Spannung der Spannungsquelle,
- Fig. 9: zeigt ein Flussdiagramm eines bei der Erfindung verwendeten Mikroprozessors.

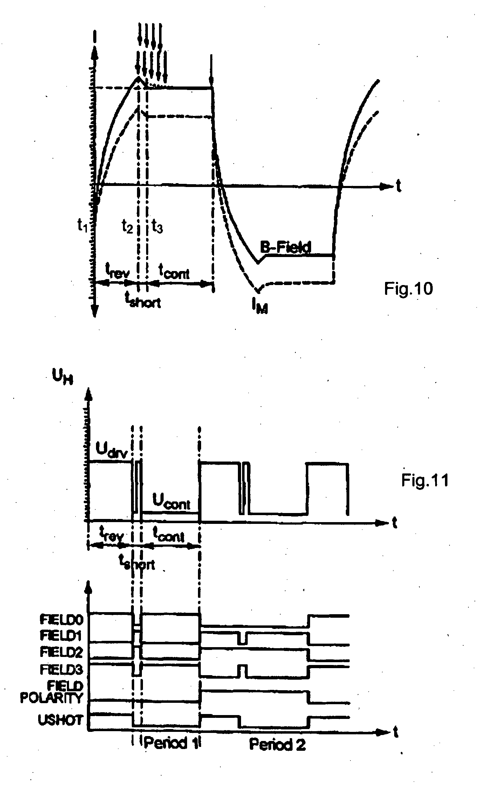

- Fig. 10: zeigt eine graphische Darstellung des zeitlichen Verlaufs des Spulenstroms und des zeitlichen Verlaufs des Magnetfeldes bei der aus dem Stand der Technik bekannten Lösung,
- Fig. 11: zeigt eine graphische Darstellung des zeitlichen Verlaufs der an der Spulenanordnung anliegenden Spannung bei der aus dem Stand der Technik bekannten Lösung,

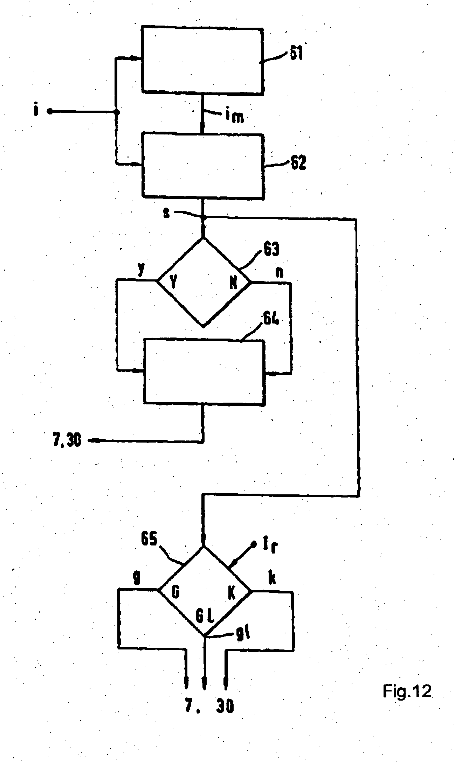

- Fig. 12: eine graphische Darstellung des zeitlichen Verlaufs der an der Spulenanordnung anliegenden Spannung bei der erfindungsgemäßen Vorrichtung und
- Fig. 13: eine graphische Darstellung des zeitlichen Verlaufs des Spulenstroms und des zeitlichen Verlaufs des Magnetfeldes bei der erfindungsgemäßen Vorrichtung.

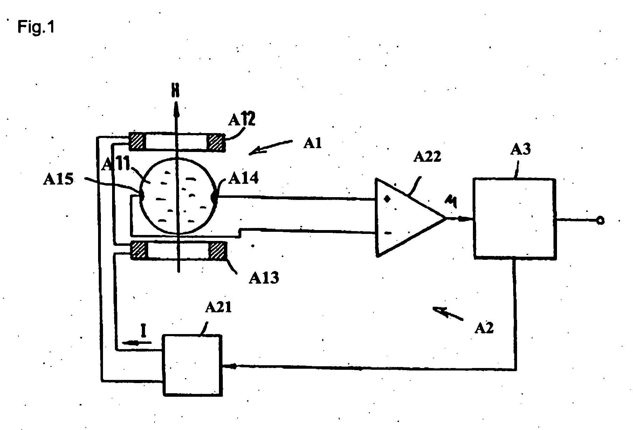

In Fig. 1 ist schematisch und teilweise in der Form eines Blockschaltbilds ein für den Ablauf des Verfahrens der Erfindung geeigneter magnetisch-induktiver Durchflußmesser dargestellt, mittels dem Meßwerte für zumindest eine physikalische Größe eines in einer - hier nicht gezeigten - Rohrleitung strömenden Mediums, insb. eines Fluids, erzeugt werden können. Beispielsweise kann der Durchflußmesser dazu verwendet werden, einen Volumendurchfluß und/oder eine Strömungsgeschwindigkeit einer elektrisch leitenden Flüssigkeit zu messen.

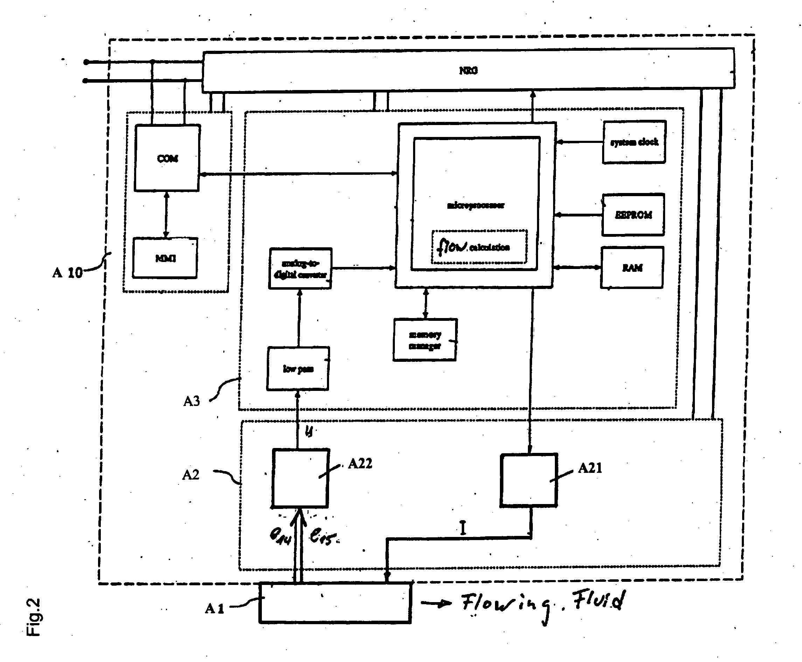

Der hier gezeigte Durchflußmesser umfaßt einen Durchflußaufnehmer 1 zum Erzeugen von mit der zu messenden physikalischen Größe korrespondierenden Meßpotentialen, eine einen Mikrocomputer aufweisende Meßgerät-Elektronik mit einer, insb. ebenfalls zumindest teilweise mittels des Mikrocomputers realisierte, Meß- und Betriebsschaltung 2 zum Erfassen der Meßpotentiale und zum Erzeugen wenigstens eines mit der physikalischen Größe korrespondierenden Meßsignals sowie eine, insb. mittels des Mikrocomputers realisierte, Auswerte-Schaltung 3, die dazu dient die Meß- und Betriebsschaltung 2 und somit auch den Durchflußaufnehmer 1 anzusteuern sowie unter Verwendung des wenigstens einen Meßsignals die physikalischen Größe repräsentierenden Meßwerte zu erzeugen. Die Meß- und Betriebsschaltung 2 und ggf. auch einige Komponenten des Durchflußaufnehmers 1 können beispielsweise, wie auch in Fig. 2 schematisch angedeutet, in einem Elektronikgehäuse 10 des Durchflußmessers untergebracht sein.

Zum Durchflußaufnehmer 1 gehört ein in den Verlauf der erwähnten Rohrleitung einsetzbares Meßrohr 11, das eine Rohrwand aufweist und durch das im Betrieb in Richtung einer Meßrohrlängsachse das zu messende Fluid strömen gelassen wird.

Zur Vermeidung eines Kurzschließens von im Fluid induzierten Spannungen ist ein das Fluid berührendes Innenteil des Meßrohrs 11 elektrisch nicht-leitend ausgeführt. Metall-Meßrohre sind dafür üblicherweise innen mit einer elektrisch nicht-leitenden Schicht, z.B. aus Hartgummi, Polyfluorethylen etc., versehen und auch im Allgemeinen nicht-ferromagnetisch. ei vollständig aus einem Kunststoff oder aus einer Keramik, insb. aus Aluminiumoxid-Keramik, bestehenden Meßrohren ist die elektrisch nichtleitende Schicht demgegenüber nicht erforderlich:

Eine von einer in der Meß- und Betriebsschaltung 2 vorgesehenen Treiber-Elektronik 21 angesteuerte Spulenanordnung eines Magnetfeld-Systems des Durchflußmessers weist im gezeigten Ausführungsbeispiel eine am Meßrohr 11 angeordnete erste Feldspule 12 und eine am Meßrohr 11 angeordnete zweite Feldspule 13 auf. Die Feldspulen 12, 13 liegen auf einem ersten Durchmesser des Meßrohrs 11. Das Magnetfeld-System dient dazu, im Zusammenspiel mit der Meßgerät-Elektronik ein die Rohrwand und das hindurchströmende Fluid durchsetzendes Magnetfeld B zu erzeugen. Dieses entsteht, wenn in den, hier in Reihe geschalteten, Feldspulen 12, 13 ein von der Treiber-Elektronik 21 getriebener Erregerstrom I fließen gelassen wird. Der, insb. bi-polar, Erregerstrom I kann hierbei z.B. im Wesentlichen rechteckförmig oder zumindest rechteckähnlich ausgebildet sein.

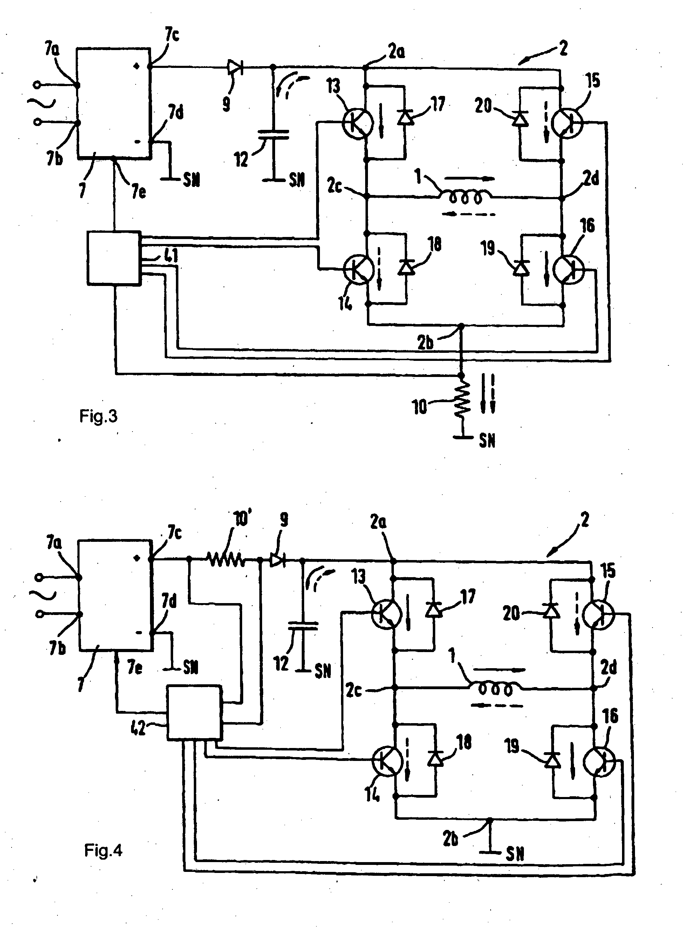

In Fig. 3 ist gezeigt, daß die Feldspulen 12, 13 keinen Kern enthalten, also so genannte Luftspulen sind. Die Feldspulen 12, 13 können jedoch auch, wie bei derartigen Spulenanordnungen üblich, um einen Kern gewickelt sein, der i.A. weichmagnetisch ist, wobei die Kerne mit Polschuhen zusammenwirken können, vgl. z.B. die US-A 55 40 103.

Die im gezeigten Ausführungsbeispiel gezeigte Spulenanordnung ist hier so ausgeführt, insb. sind die beiden Feldspulen 12, 13 so geformt und dimensioniert, daß das damit erzeugte Magnetfeld H innerhalb des Meßrohrs 11 zumindest bezüglich eines zum ersten Durchmesser senkrechten zweiten Durchmessers symmetrisch, insb. rotationssymmetrisch, ausgebildet ist.

Nach einer Ausgestaltung der Erfindung wird mittels der Treiber-Elektronik 21 ein, insb. auf konstante Amplitude geregelter, Gleichstrom erzeugt, der dann mittels eines entsprechenden, beispielsweise in H- oder T-Schaltung konfigurierten, Schaltwerks periodisch umgeschaltet und so zu einem Wechselstrom mit geregelter Amplitude moduliert wird. Infolgedessen wird also der Erregerstrom I so durch die Spulenanordnung fließen gelassen, daß die Spulen 12, 13, wie in Fig. 2a schematisch dargestellt, während einer ersten Schaltphase PH11 jeweils in einer ersten Stromrichtung und während einer auf die erste Schaltphase folgenden zweiten Schaltphase PH12 jeweils in einer zur ersten Stromrichtung umgekehrten Gegenrichtung durchflossen sind, vgl. zur Stromregelung und -umpolung z.B. auch die US-A 44 10 926 oder die US-A 60 31 740.

Auf die zweite Schaltphase PH12 folgt eine dritte Schaltphase PH21, während der der Erregerstrom I wieder in der ersten Stromrichtung fließt. Auf die dritte Schaltphase folgt eine vierte Schaltphase PH22, während der der Erregerstrom I wieder in der Gegenrichtung fließt. Darauf folgt eine entsprechende Schaltphase PH31 u.s.w.. Bezüglich der Umkehrung der Richtung des Erregerstroms I bilden jeweils zwei der aufeinanderfolgenden Schaltphasen eine Umschaltperiode P1, P2, P3 u.s.w. Einhergehend mit der Umpolung des die Spulenanordnung durchfließenden Erregerstroms I wird, abgesehen von einer allfälligen Schaltphasenverschiebung im Wesentlichen synchron dazu auch das Magnetfeld H wiederholt umgepolt, vgl. hierzu Fig. 2a.

Zum Erzeugen wenigstens eines mit der Meßgröße korrespondierenden elektrischen Meßsignals ist ferner eine am Meßrohr oder zumindest in dessen Nähe angeordnete Sensoranordnung im Meßaufnehmer vorgesehen. Nach einer Ausgestaltung der Erfindung weist die Sensoranordnung praktisch direkt am Meßrohr angebrachte Elektroden auf. Eine an einer Innenseite der Rohrwand des Meßrohrs 11 angeordnete erste Elektrode 14 dient dabei dem Abgriff eines vom Magnetfeld H induzierten ersten Potentials e₁₄. Eine in der gleichen Weise angeordnete zweite Elektrode 15 dient ferner dem Abgriff eines vom Magnetfeld induzierten zweiten Potentials e₁₅. Die Meßelektroden 14, 15 liegen auf dem zum ersten Durchmesser und zur Meßrohrlängsachse senkrechten zweiten Durchmesser des Meßrohrs 11, sie können aber z.B. auch auf einer zum zweiten Durchmesser parallelen Sehne des Meßrohrs 11 liegen, vgl. hierzu auch die US-A 56 46 353.

In Fig. 1b sind die Meßelektroden 14, 15 als galvanische Meßelektroden gezeigt, also als solche, die das Fluid berühren. Es können jedoch auch zwei kapazitive, also z.B. innerhalb der Rohrwand des Meßrohrs 11 angeordnete, Meßelektroden verwendet werden. Jede der Meßelektroden 14, 15 greift für sich ein elektrisches Potential e₁₄, e₁₅ ab, das im Betrieb aufgrund des Faraday-Gesetzes im hindurchströmenden Fluid induziert wird.

Wie in der Fig. 1b gezeigt, sind die Meßelektroden 14, 15 im Betrieb zumindest zeitweise mit einem invertierenden bzw. nicht-invertierenden Eingang eines Differenzverstärkers 22 verbunden. Somit wird eine als Meßsignal u dienende Potentialdifferenz der beiden von den Meßelektroden 14, 15 abgegriffenen Potentiale e₁₄, e₁₅ gebildet, das mit einer im hindurchströmenden Fluid aufgebauten Spannung und somit auch mit der zu messenden physikalischen Größe korrespondiert. Die an den Meßelektroden 14,15 anliegenden Potentiale e₁₄, e₁₅ liegen üblicherweise etwa im Bereich von 10 mV bis 100 mV. Es sei an dieser Stelle allerdings erwähnt, daß die Potentiale aber auch über separate Meßkanäle abgegriffen, insb. auch einzeln digitalisiert werden können, vgl. hierzu auch die US-A 59 07 103. Das im gezeigten Ausführungsbeispiel ausgangs des Differenzverstärkers 22 anliegende Meßsignal u wird, wie in Fig.1a, 1b schematisch dargestellt, der im Durchflußmesser vorgesehenen Auswerteschaltung 3 zugeführt.

Die Fig. 3 und 4 betreffen Ausführungsbeispiele für ein als H-Brückenschaltung ausgelegtes Schaltwerk. In einem ersten Brückenzweig liegt der gesteuerte Strompfad eines ersten Transistors 13, in einem zweiten Brückenzweig der gesteuerte Strompfad eines zweiten Transistors 14, in einem dritten Brückenzweig der gesteuerte Strompfad eines dritten Transistors 15 und in einem vierten Brückenzweig der gesteuerte Strompfad eines vierten Transistors 16. Durch diesen Aufbau ergeben sich vier Eckpunkte 2a, 2b, 2c, 2d der H-Schaltung: Die Transistoren 13, 14 sind durch den Eckpunkt 2c, die Transistoren 14, 16 durch den Eckpunkt 2b, die Transistoren 15, 16 durch den Eckpunkt 2d und die Transistoren 13, 15 durch den Eckpunkt 2a miteinander verbunden. Eine erste Brückendiagonale liegt zwischen den Eckpunkten 2a, 2b und eine zweite Brückendiagonale zwischen den Eckpunkten 2c, 2d. In die zweite Brückendiagonale ist eine wenigstens eine Feldspule umfassende Spulenanordnung 1 eines Magnetfeld-Systems des Durchflußaufnehmers gelegt, d.h. ein erster bzw. ein zweiter Anschluss der Spulenanordnung ist mit dem Eckpunkt 2c bzw. 2d verbunden.

Im Betrieb der im Zusammenspiel mit der Spulenanordnung als Rechteck-Modulator wirkenden Schaltungsanordnung sind entweder der erste und der vierte Transistor 13, 16 oder der zweite und der dritte Transistor 14, 15 gleichzeitig leitend gesteuert. Somit kann im ersten Fall (Transistoren 13, 16 leitend) ein (positiv vorausgesetzter) Strom vom Eckpunkt 2a zum Eckpunkt 2b durch die Spulenanordnung 1 und in der durch den nicht-gestrichelt gezeichneten Pfeil angegebenen Richtung fliessen. Sind dagegen die Transistoren 14, 15 leitend, so fliesst der gleiche Strom in umgekehrter Richtung durch die Spulenanordnung 1, wie dies durch den gestrichelt gezeichneten Pfeil veranschaulicht ist.

Die Spulenanordnung 1 hat eine Induktivität L und ist Teil eines ein Magnetfeld erzeugenden Magnetsystems eines magnetisch-induktiven Durchflußaufnehmers, der nicht dargestellt ist, da der mechanische Aufbau solcher Aufnehmer dem Fachmann längst bekannt ist, vgl. die eingangs genannte US-A 42 04 240. Für die Erfindung ist lediglich von Interesse, daß das Magnetsystem einen Spulenkern und/oder einen Polschuh umfaßt.

Wie dem Fachmann ebenfalls längst geläufig ist, wird der Erreger- bzw. Spulenstrom durch das erwähnte abwechselnde Leitendsteuern der Transistoren 13, 16 bzw. 14, 15 so erzeugt, daß er in der ersten Halbperiode einer Periodendauer positiv mit einem konstanten ersten Strom-Endwert und in deren zweiter Halbperiode negativ mit einem konstanten zweiten Strom-Endwert ist, der zum ersten Strom-Endwert betragsgleich ist. Unter Strom-Endwert wird derjenige konstante Wert des Spulenstroms, z.B. 85 mA, verstanden, der vor dem Umschalten in die andere Stromrichtung fließt.

Der Eckpunkt 2c liegt in Fig. 3 über einen Widerstand 10 an einem Schaltungsnullpunkt SN. Der Widerstand 10 bildet mit der H-Schaltung 2 eine Serienschaltung und ist vom Spulenstrom durchflossen.

In Fig. 3 ist ferner eine gesteuerte Spannungsquelle 7 dargestellt, die einen Spannungsausgang 7c aufweist und eine über der Serienschaltung, also zwischen dem Eckpunkt 2a und dem Schaltungsnullpunkt SN, liegende, hier positiv vorausgesetzte Spannung bestimmt, vgl. das Pluszeichen am Ausgang 7c. Die gesteuerte Spannungsquelle 7 ist über zwei Anschlüsse 7a, 7b vom Netz gespeist; sie liegt ferner über einen Ausgang 7d am Schaltungsnullpunkt SN. Die Spannung am Ausgang 7c ist über die Anoden-Katoden-Strecke einer Diode 9 an den Eckpunkt 2a gelegt. Zum Schaltungsnullpunkt SN führt von der Katode der Diode 9 und dem Eckpunkt 2a ein Kondensator 12, der eine Kapazität C hat.

In Fig. 4 ist die Reihenfolge von Spulenanordnung und Widerstand in der Serienschaltung vertauscht: Der Eckpunkt 2b der H-Schaltung 2 liegt nunmehr am Schaltungsnullpunkt SN; dagegen ist der Widerstand als Widerstand 10' nun zwischen dem Ausgang 7c der gesteuerten Spannungsquelle 7 und der Anode der Diode 9 angeordnet. Dies ergibt den Vorteil, daß ein allfälliger Kurzschluß zwischen den Eckpunkten 2c, 2d, also z.B. in der Spulenanordnung 2, die gerade leitenden Transistoren 13, 16 bzw. 14, 15 nicht zerstören kann, da der Spulenstrom durch den Widerstand 10' begrenzt wird.

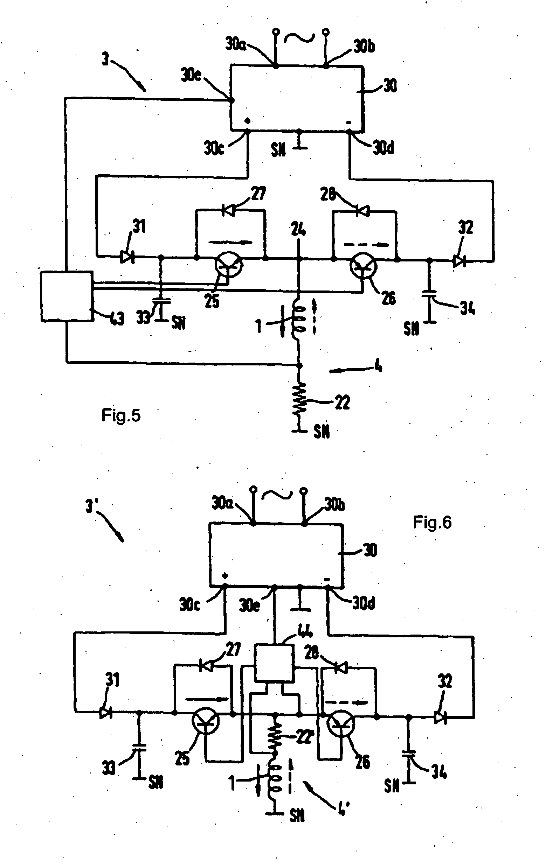

Die Fig. 5 und 6 betreffen Ausführungsbeispiele mit einer jeweiligen T-Schaltung 3 bzw. 3'. Ein Widerstand 22 bzw. 22' bildet mit der Spulenanordnung 1 eine Serienschaltung 4 bzw. 4'. Diese ist bei der Schaltung von Fig. 3 so gebildet, daß die Spulenanordnung 1 über den Widerstand 22 am Schaltungsnullpunkt SN liegt, und diese ist vom Spulenstrom durchflossen. Demgegenüber liegt in Fig. 4 am Schaltungsnullpunkt SN der erste Anschluß der Serienschaltung 4'.

Ein erster Anschluß des gesteuerten Strompfads eines ersten Schalter-Transistors 25 ist mit einem zweiten Anschluß der Serienschaltung 4, bzw. 4' verbunden. Ein zweiter Anschluß dieses Strompfads liegt an einem ersten Ausgang 30c einer gesteuerten Spannungsquelle 30, der eine über der Serienschaltung liegende positive Spannung bestimmt, vgl. das Pluszeichen am Ausgang 30c. Ein erster Anschluß des gesteuerten Strompfads eines zweiten Schalter-Transistors 26 ist mit dem zweiten Anschluß der Serienschaltung 4 bzw. 4' verbunden. Ein zweiter Anschluß dieses Strompfads liegt an einem zweiten Ausgang 30d der gesteuerten Spannungsquelle 30, der eine über der Serienschaltung liegende negative Spannung bestimmt, an, vgl. das Minuszeichen am Ausgang 30d. Die Schalter-Transistoren 25, 26 werden abwechselnd leitend gesteuert, so daß der Spulenstrom abwechselnd seine Richtung umkehrt, wie die beiden Pfeile an der Spulenanordnung 1 veranschaulichen. Auch hier ist der Spulenstrom in der ersten Halbperiode einer Periodendauer positiv mit einem konstanten ersten Strom-Endwert und in der zweiten Halbperiode negativ mit einem konstanten zweiten Strom-Endwert, der zum ersten Strom-Endwert betragsgleich ist.

In den Fig. 5 und 6 ist die positive Spannung am Ausgang 30c der Spannungsquelle 30 über die Anoden-Katoden-Strecke einer ersten Diode 31 an den zweiten Anschluß des Schalter-Transistors 25 gelegt. Von diesem Anschluß und der Katode der Diode 31 führt zum Schaltungsnullpunkt SN ferner ein erster Kondensator 33, der eine Kapazität C1 hat. Die negative Spannung am Ausgang 30d der Spannungsquelle 30 ist über die Katoden-Anoden-Strecke einer zweiten Diode 32 an den zweiten Anschluß des Schalter-Transistors 26 gelegt. Von diesem Anschluß und der Katode der Diode 32 führt zum Schaltungsnullpunkt SN ferner ein zweiter Kondensator 34, der eine Kapazität C2 hat.

Bei den Ausführungsbeispielen der Fig. 3 und 4 bzw. 5 und 6 bildet die erwähnte Induktivität L der Spulenanordnung 1 mit der Kapazität C des Kondensators 12 bzw. mit den Kapazitäten C1 bzw. C2 einen jeweiligen Resonanzkreis. Dieser bewirkt, daß die Spannung über der Serienschaltung resonanz-überhöht ist und der Spulenstrom während eines Anstiegs zu Beginn jeder Halbperiode eine steilere Anstiegsflanke hat, als wenn der Resonanzkreis nicht vorhanden wäre.

Bei der Digitalisierung wird das zugeführte Meßsignal u vorzugsweise digitalisiert und entsprechend zumindest abschnittsweise in Form digitaler Datensätze abgespeichert, so daß zur Ermittlung auch des Diagnosewerts eine Information über den zeitlichen Verlauf eines Abschnitts des Meßsignals u in digitaler Form zur Verfügung gehalten wird.

Erfindungsgemäß dient die Auswerteschaltung 3 auch dazu, einen dem Überprüfen des magnetische-induktiven Durchflußmessers dienenden Diagnosewert zu erzeugen, der einen momentanen Betriebszustand des Durchflußmessers, insb. aber einen momentanen Betriebszustand des Magnetfeld-Systems repräsentiert. Beispielsweise kann der Diagnosewerte dazu verwendet werden einen entsprechenden Alarm zu generieren, wenn aufgrund von Abweichungen des Diagnosewerts von einem entsprechenden, vorab ermittelten Referenz- oder Schwellenwerts ein defektes Magnet-System erkannt worden ist. Solche Defekte können z.B. vibrationsbedingte Brüche elektrischer Leitungen und/oder Lockerungen der montierten Elemente des Magnetfeld-System sein. Darüber hinaus können auch erhebliche, insb. schockartige, Schwankungen der Fluidtemperatur zu thermisch bedingten Störungen des Magnetfeld-Systems oder zumindest Veränderungen bezüglich der Kalibrierung des Magnetfeld-Systems führen.

Dafür wird im gezeigten Ausführungsbeispiel die Spannungsquelle, wie bereits auch in der US-A 60 31 740 beschrieben, zunächst so gesteuert, daß sie in jeder Halbperiode während einer ersten Teilperiode des Spulenstroms, die im folgenden als Anstiegsdauer tᵣₑᵥ bezeichnet ist, einen Spannungs-Anfangswert, U_{drv}, erzeugt, der, z.B. mehrfach, höher ist als ein konstant geregelter Spannungs-Endwert U_{cont} während einer zweiten Teilperiode , die im folgenden als Restdauer tc bezeichnet ist, vgl. Fig. 5a und 5b. Ferner wird der Spannungsabfall am Widerstand 10, 10' bzw. 22, 22' dazu herangezogen, daß eine Wirkung von Wirbelströmen, die während des Anstiegs des Spulenstroms in den Spulenkernen und/oder den Polschuhen induziert werden und die die Anstiegsflanke des Magnetfelds gegenüber der Anstiegsflanke des Spulenstroms verzögert, kompensiert wird. Dies wird dadurch erreicht, daß in jeder Halbperiode die Anstiegsdauer tᵣₑᵥ des Spulenstroms und die Höhe des positiven bzw. negativen Spannungs-Endwerts U_{cont} derart beeinflusst bzw. geregelt werden, dass einerseits nach dem Erreichen eines Strommaximums Im kein weiterer Anstieg des Spulenstroms auftritt, so dass das Magnetfeld einen dem konstanten Strom-Endwert des Spulenstroms entsprechenden konstanten Magnetfeld-Endwert Bₘ schon erreicht, wenn der Spulenstrom das Strommaximum Im erreicht, vgl. Fig. 5a, und dass andererseits die Höhe des positiven bzw. negativen Spannungs-Endwerts U_{cont} immer den konstanten Strom-Endwert Ic von z.B. 85 mA bedingt. Dies wird dadurch erreicht, dass aus dem während einer Halbperiode nach dem Strommaximum Im des Spulenstroms bis zum Erreichen des Strom-Endwerts auftretenden Verlauf des Spannungsabfalls am Widerstand durch mindestens dreimaliges aufeinanderfolgendes Abtasten eine Korrekturgrösse für die Spannung über der H-Schaltung bzw. der T-Schaltung in der nächsten Halbperiode gebildet wird.

In den Fig. 3 bis 6 sind die Transistoren 13, 14, 15, 16 der H-Schaltung bzw. die Schalter-Transistoren 25, 26 der T-Schaltung immer mit nicht-angeschlossener Steuer-Elektrode gezeichnet. Dadurch soll lediglich angedeutet werden, dass die Ansteuerung dieser Transistoren im Stand der Technik, z.B in der eingangs erwähnten US-A 44 10 926, hinlänglich beschrieben ist und der Fachmann somit weiß, was er wie anzusteuern hat. Ferner ist der gesteuerte Strompfad der Transistoren 13, 14, 15, 16 bzw. 25, 26 mit einer Freilaufdiode 17, 18, 19, 20 bzw. 27, 28 überbrückt. Die erwähnten Transistoren sind zwar als Bipolar-Transistoren gezeichnet, jedoch können natürlich auch Feldeffekt-Transistoren, insb. Isolierschicht-Feldeffekt-Transistoren verwendet werden.

In Fig. 5a ist in Ordinatenrichtung über der Zeit t als Abszisse der Verlauf des Spulenstrom I und der Induktion B des Magnetfelds für eine ganze Periodendauer aufgetragen. In der ersten Halbperiode mit positivem Spulenstrom I ist eingezeichnet, dass sich die Halbperiodendauer aus einer Anstiegsdauer ta und einer Restdauer tc zusammensetzt. Diese ist gleich derjenigen Dauer, während der die Induktion B des Magnetfelds konstant ist. Während der Anstiegsdauer tᵣₑᵥ steigt einerseits der Spulenstrom I_{M} steil an, fällt dann nach Erreichen eines Strommaximums Iₘ wieder ab und erreicht erst später als die Induktion B seinen konstanten Strom-Endwert, I_{cont}. vgl. den nur allmählichen Abfall des Spulenstroms nach dem Strommaximum Iₘ. Dieses Verhalten des Spulenstroms ist auf die eingangs erläuterten, in den Spulenkernen und/oder den Polschuhen induzierten Wirbelströme zurückzuführen. Der Zeitpunkt des Erreichens des Strommaximums Im bestimmt die Grenzlinie zwischen der Anstiegsdauer tᵣₑᵥ und der Restdauer t_{cont}. Während der Anstiegsdauer tᵣₑᵥ steigt andererseits die Induktion B zunächst fast mit identischer Steilheit wie der Spulenstrom an, der Anstieg wird später allerdings flacher und erreicht bereits am Ende der Anstiegsdauer ta wie bezweckt den konstanten Induktions-Endwert Bₘ.

Durch die während des abfallenden Teils der Restdauer t_{cont} oberhalb der Kurve des Spulenstroms eingezeichneten Pfeile ist veranschaulicht, dass der bis zum Strom-Endwert Im abfallende Spulenstromverlauf mindestens dreimal, z.B. jede Millisekunde, abgetastet wird. Im Beispiel der Fig. 5a wird abfallende Teil des Spulenstroms viermal abgetastet. Aus den Abtastwerten wird gemäss der Erfindung das Steuersignal für die gesteuerte Spannungsquelle erzeugt, wie im einzelnen noch erläutert werden wird.

Die Fig. 5b zeigt in Ordinatenrichtung über der Zeit t als Abszisse den Verlauf der an der Serienschaltung mit der H-Schaltung bzw. mit der T-Schaltung wirksamen Spannung. Die erste Spitze Us ist auf Resonanzüberhöhung in der Spulenanordnung zurückzuführen. Der darauf folgende konstante Wert ist der erwähnte Spannungs-Anfangswert U_{drv}, der zur Versteilerung des Anstiegs des Spulenstroms beiträgt. Ohne Spannungsüberhöhung würde während der gesamten Anstiegsdauer tᵣₑᵥ nur der Spannungs-Anfangswert Ua vorhanden sein. Während der Restdauer t_{cont} tritt der konstante Spannungs-Endwert U_{cont} auf. Aus Fig. 5b ist ersichtlich, dass, wie bereits erwähnt wurde, der Spannungs-Anfangswert U_{drv} grösser als der Spannungs-Endwert U_{cont} ist.

In den Fig. 3 bis 6 ist deren Steuerung durch einen Kontroller 41 bzw. 42 bzw. 43 bzw. 44, der zwischen dem Widerstand 10 bzw. 10' bzw. 22 bzw. 22' und einem Steuereingang 7e bzw. 30e der gesteuerten Spannungsquelle 7 bzw. 30 angeordnet ist, veranschaulicht. Ferner steuert der entsprechende Kontroller die Transistoren 13, 14, 15, 16 der H-Schaltung bzw. die Schalter-Transistoren 25, 26 der T-Schaltung. Der Kontroller 41 bzw. 42 bzw. 43 bzw. 44 ist zumindest anteilig durch den bereits erwähnten, entsprechend programmierten Mikrocomputer bzw. Mikroprozessor realisiert. Diesem ist ein Analog/DigitalWandler vorgeschaltet, der den Spannungsabfall am Widerstand 10 bzw. 10' bzw. 22 bzw. 22' digitalisiert. Mikroprozessor und Analog/Digital-Wandler sind natürlich von einem Taktoszillator getaktet.

Beim erfindungsgemäßen Verfahren wird also zunächst, ähnlich wie bei dem in der US-B 67 63 729 bzw. dem in der US-A 60 31 740 beschriebenen Durchflußmesser auch die den Erregerstrom I_{M} zumindest zeitweise treibende Spannung U_{H} zum Erhöhen der Stromstärke I, des von der Spannung getriebenen und in der wenigstens einen Feldspule fließenden Erregerstroms I_{M} auf den maximalen Stromwert, Iₘ, zu einem ersten Zeitpunkt, t₁, von in der vorausgehende Halbperiode eingestellten, von Null verschiedenen momentanen ersten Spannungshöhe, U_{cont}, auf die, insb. konstante oder konstant-geregelte, zweite Spannungshöhe, U_{drv}, gehoben.

Wie bereits erwähnt, wird der während der Zeitspanne, t_{cont}, fließende Spulenstrom I_{M} zumindest abschnittsweise abgetastet, digitalisiert und entsprechend im bereit erwähnten Mikrocomputer abgespeichert. Die gemessenen und digital gespeicherten Stromwerte können nunmehr ohne Weiteres zur Berechnung des Spannungsprofils, nach dem die den Erregerstrom I_{M} treibende Spannung künftig eingestellt werden soll, für die nächste Halbperiode des Magnetfeldes B verwendet werden. Es kommt somit praktisch ein über mehrere Meßzyklen iterativ oder rekursiv durchgeführtes Näherungs-Verfahren zum Einsatz. Die während der Zeitspanne tᵣₑᵥ an der Spulenanordnung anliegende Überspannung U_{drv} wird von Halbperiode zu Halbperiod bzw. Meßzyklus zu Meßzyklus sukzessive so abgestimmt, daß der Spulenstrom I_{M} während der verbleibenden Zeitspanne t_{cont} einer jeden Halbperiode stetig gegen einen konstanten Strom-Endwert I_{c} hin abfällt. Es wird insoweit also das Augenmerk darauf gelegt, daß die Zeitspanne tᵣₑᵥ, während der die Überspannung U_{drv} an der Spulenanordnung angelegt ist, so bemessen ist, daß der gemessene Spulenstrom I_{M} während der Zeitspanne t_{cont} nicht mehr ansteigt. Zeigt sich ein Anstieg, so ist dies ein Anzeichen dafür, daß die Zeitspanne tᵣₑᵥ zu kurz gewählt war. Als Folge hiervon wird die Meß- und Betriebsschaltung 2 die Zeitspanne tᵣₑᵥ während der nachfolgenden Halbperioden solange um geeignete Beträge erhöhen, bis der gemessene Erregerstrom I_{M} das gewünschte Verhalten aufweist.

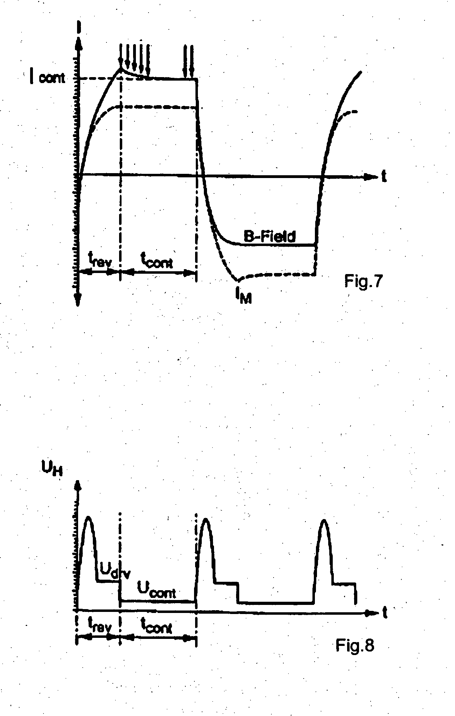

Der Mikrocomputer kann beispielsweise entsprechend dem in Fig. 7 dargestellten Flußdiagramm programmiert werden, in dem geeignete Funktions- und Entscheidungsblöcke dargestellt sind. Mit Kleinbuchstaben sind Digitalsignale versehen, die für das Flußdiagramm wichtig sind. Mittels des bereits erwähnten Analog/Digital-Wandlers wird der Spannungsabfall am Widerstand digitalisiert, so daß ein den Spulenstrom I repräsentierendes Digitalsignal i entsteht. Dieses ist dem Eingang eines Maximumdetektors 61 und dem Eingang einer Torstufe 62 zugeführt, die auch mit einem vom Maximumdetektor 61 stammenden Maximumsignal im gespeist ist. Die Torstufe 62 leitet nur solche Anteile des den Spulenstrom repräsentierenden Digitalsignals i als Stromsamples s weiter, die später als das Auftreten des Maximumsignals im liegen.

Eine erste Entscheidungsstufe 63 überprüft aufeinanderfolgende, benachbarte Stromsamples s unter dem Kriterium, ob das spätere Sample grösser als das frühere ist, ob also der Spulenstrom zwischen zwei Samples angestiegen ist, und gibt zutreffendenfalls an einem JA-Ausgang Y ein Steuersignal y sowie nicht-zutreffendenfalls an einem NEIN-Ausgang N ein Steuersignal n ab. Das Steuersignal y veranlasst eine Pulsdauerstufe 64, die Anstiegsdauer ta zu verlängern, und das Steuersignal n veranlasst die Pulsdauerstufe 64, die Restdauer t_{cont} zu verlängern. Ein Ausgang der Pulsdauerstufe führt zur Spannungsquelle 7 bzw. 30.

Eine zweite Entscheidungsstufe 65 überprüft laufend die Stromsamples s unter dem Kriterium, ob ein Stromsample s grösser, gleich oder kleiner als ein Strom-Referenzwert ir ist, der zum Strom-Endwert t_{cont} proportional ist und ihn festlegt. Die Entscheidungsstufe 65 gibt zutreffendenfalls an einem GRÖSSER-Ausgang G ein Steuersignal g, an einem GLEICH-Ausgang GL eine Steuersignal gl oder an einem KLEINER-Ausgang K ein Steuersignal k ab. Diese Steuersignale g, gl, k sind der Spannungsquelle 7 bzw. 30, gegebenenfalls unter Einfügung eines Digital/ Analog-Wandlers, zugeführt und wirken auf den von ihr in einer Periodendauer des Spulenstroms abgegebenen Spannungs-Anfangswert Ua derart ein, dass ihn das Steuersignal g in der folgenden Periodendauer vergrössert oder dass ihn das Steuersignal gl in der folgenden Periodendauer unverändert lässt oder dass ihn das Steuersignal k in der folgenden Periodendauer verkleinert.

Während der eigentlichen Messung des Volumenstroms muß sowohl die Spannung über der Spulenanordnung als auch der durch die Spulenanordnung fließende Erregerstrom I_{M} konstant sein, da die Stabilität des Meßsignals u.a. auch durch die induktive Einkopplung von der Spulenanordnung zu den Meßelektroden negativ beeinflußt wird.

Idealerweise ist in beiden Halbperioden der Stromendwert des wahren Spulenstroms I_{L} im Wesentlichen konstant, entgegengesetzt und betragsgleich. Praktisch ist dies bei dem in der US-B 67 63 729 bzw. dem in der US-A 60 31 740 beschriebenen Durchflußmesser erst jedoch der Fall, nachdem eine erhebliche Zeit nach dem Beginn der Zeitspanne t_{cont} verstrichen ist. Damit ist das Zeitfenster für die während der Zeitspanne T_{cont} möglichen exakten Messungen aber praktisch nahezu auf die Hälfe einer Halbperiode beschränkt. Aufgrund der in den Polschuhen und Spulenkernen entstehenden Wirbelströme tritt dieser Idealfall in der Realität nicht auf. Vielmehr entspricht der außerhalb der Spulenanordnung meßbare Erregerstrom I_{M} immer einer Stromsumme, die sich aus dem wahren Spulenstrom I_{L} und dem Wirbelstrom I_{eddy} zusammensetzt. Da aber lediglich der Erregerstrom I_{M} von der Meß- und Betriebsschaltung 2 als Regelgröße verwendet wird, ist zwar der Erregerstrom I_{M} konstant, jedoch nicht zwangsläufig das eigentlich für die Messung konstant zuhaltende Magnetfeld B, das das Meßrohr durchsetzt. Ein entsprechendes Ersatzschaltbild der Spulenanordnung ist in der Fig. 2 dargestellt.

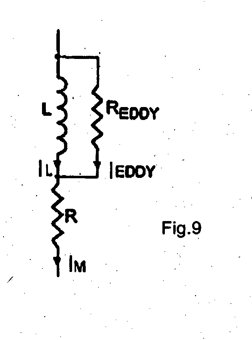

Beim erfindungsgemäßen Verfahren werden in vorteilhafter Weise die im Magnetfeld-System induzierten Wirbelströme ferner dadurch minimiert, daß nicht nur eine Überspannung Uᵣₑᵥ an die Spulenanordnung für die vorab ermittelte Referenz-Zeitspanne Tᵣₑᵥ = t₂ - t₁ bis zum Erreichen des vorgegebenen Strom-Maximum Iₘ angelegt wird, wobei die Überspannung so bemessen ist, daß der durch die Spulenanordnung fließende Erregerstrom I_{M} nach Ablauf der Referenz-Zeitspanne Tᵣₑᵥ stetig gegen einen im Wesentlichen konstanten Strom-Endwert I_{c} abfällt, sondern nach dem vorab zumindest näherungsweise festgestellten Ablauf der Referenz-Zeitspanne Tᵣₑᵥ für eine vorgegebene, insb. gleichermaßen iterativ ermittelte, Zeitspanne Tₛₕₒᵣₜ = t₃ - t₂ eine den Erregerstrom I_{M} und somit auch das Magnetfeld schneller wieder absenkende Gegenspannung Uₛₕₒᵣₜ an die Spulenanordnung 1 anlegt wird, wobei die Zeitspanne Tₛₕₒᵣₜ so bemessen ist, daß der Einfluß der während des Umschaltvorgangs in die Spulenanordnung induzierten Wirbelströme näherungsweise kompensiert zumindest aber erheblich reduziert wird. Der Effekt dieses Verfahrens ist aus der Fig. 9 ersichtlich, worin die durchgezogene Linie den Meßstromverlauf, wie er sich bei der erfindungsgemäßen Lösung darstellt, kennzeichnet; hingegen zeigt die gepunktete Linie das zeitliche Verhalten des Erregerstrom bei der aus dem Stand der Technik bekannt gewordenen Lösung. Bei der erfindungsgemäßen Lösung ist der konstante Strom-Endwert I_{cont} praktisch mit Ablauf der Zeitspanne Tₛₕₒᵣₜ erreicht; bei der bekannten Lösung wird der der konstante Strom-Endwert t_{cont} erst zu einem viel späteren Zeitpunkt innerhalb der Zeitspanne T_{cont} erreicht. Während eines ersten Umschaltvorgangs legt die Meß- und Betriebsschaltung 2, wie bereits oben erläutert, für eine aktuell vorgegebene Zeitspanne Tₛₕₒᵣₜ eine entsprechende Gegenspannung U_{G} an die Spulenanordnung an. Nachfolgend erfaßt die Meß- und Betriebsschaltung mehrere Strom-Meßwerte innerhalb der vorgegebenen Zeitspanne T_{cont}. Beispielsweise können sowohl die Zeitspanne, Tᵣₑᵥ, als auch die Zeitspanne Tₛₕₒᵣₜ im Betrieb durch, insb. iterative, Nährungsverfahren sukzessive optimiert werden. Für den Fall, daß mit Ablauf der aktuell gültigen Zeitspanne Tₛₕₒᵣₜ der Strom-Endwert I_{c} nicht erreicht ist, wird die Zeitspanne Tₛₕₒᵣₜ entsprechend vergrößert, beispielsweise um eine vorab bestimmte geeignet Schrittweite; für den Fall, daß vor Ablauf der Zeitspanne Tₛₕₒᵣₜ der Strom-Endwert I_{c} bereits erreicht ist, kann die Zeitspanne Tₛₕₒᵣₜ gff. wieder etwas verkleinert werden. Durch das Wechselspiel von angelegter Überspannung und nachträglich kurzeitig angelegter Gegenspannung Uₛₕₒᵣₜ können die Wirbelströme wirksam kompensiert und somit deren Abklingdauer signifikant reduziert werden. Es sei an dieser Stelle ferner erwähnt, dass die relevanten Zeitspannen Tᵣₑᵥ, Tₛₕₒᵣₜ, T_{cont}, wie bereits angedeutet, sowohl anhand eines vom Erregerstrom aufgenommen Samples digitaler Daten als auch direkt mittels vom Erregerstrom I_{M} und/oder von der diesen treibenden Spannung entsprechend getriggerten Zeitmeßschaltungen ermittelt werden können.

Eine im Mikrocomputer implementierte dritte Entscheidungsstufe überprüft - unter der Annahme das die Spannung U_{H} momentan konstant gehalten ist - laufend die Stromsamples s auf das Kriterium hin, ob aufeinanderfolgende Stromsample s einen konstanten Erregerstrom I_{M} signalisieren, oder nicht. Für den Fall, daß die Annahme einer konstanten Spannung zu unsicher erscheint, ist deren tatsächlicher momentaner zeitlicher Verlauf, beispielsweise ebenfalls in Form von digitalen Samples, entsprechend in die Entscheidung einfließen zulassen. Die Entscheidungsstufe gibt zutreffendenfalls solange an einem KONSTANT-Ausgang ein einen konstantbleibenden Erregerstrom I_{M} entsprechend signalisierendes Steuersignal ab, solange bis eine weitere Absenkung des Erregerstromes I_{M} unter einen für die Konstanz des Erregerstromes I_{M} festgelegten Änderungsgrenzwert erkannt wird.

Basierend auf dem vorgenannten, die der während jeder Halbperiode für die Erzeugung der eigentlichen Meß- aber auch Diagnosewerte maximal zur Verfügung stehende Zeitspanne T_{cont} optimierenden Verfahren wird zur Verbesserung der Aussagefähigkeit auch des Diagnosewerts ferner folgendes Verfahren vorgeschlagen:
Die den Erregerstrom I_{M} momentan treibenden Spannung U_{H} wird zu einem zweiten Zeitpunkt, t₂, von der zweiten Spannungshöhe, U_{drv}, auf eine, insb. konstante oder konstant-geregelte, dritte Spannungshöhe, Uₛₕₒᵣₜ, geändert, um ein Absenken des Stromstärke des momentan in der wenigstens einen Feldspule fließenden Erregerstroms I_{M} vom maximalen Stromwert, Iₘ, auf einen für den Erregerstrom I_{M} vorgegebenen, insb. konstanten, Strom-Endwert, I_{c} zu erreichen. Dabei ist die dritte Spannungshöhe, Uₛₕₒᵣₜ, kleiner gewählt als die zweite Spannunghöhe, Uᵣₑᵥ. Zum Ermitteln eines dritten Zeitpunktes, t₃, der mit einem Erreichen des Strom-Endwerts, I_{c}, korrespondiert, wird der Erregerstrom I_{M} wir zumindest zeitweise erfaßt. Darauf basierend werden eine erste Zeitkonstante, Tₛₕₒᵣₜ, für das Magnetfeld-System, die mit einer zwischen dem zweiten Zeitpunkt, t₂, und dem dritten Zeitpunkt, t₃, liegenden Zeitspanne, t₃ - t₂, korrespondiert, und/oder eine zweite Zeitkonstante, Tᵣₑᵥ + Tₛₕₒᵣₜ, für das Magnetfeld-System, die mit einer zwischen dem ersten Zeitpunkt, t₁, und dem dritten Zeitpunkt, t₃, liegenden Zeitspanne, t₃-t₁, korrespondiert, ermittelt. Zum Ermitteln eines einen momentanen Betriebszustand des Durchflußmessers schließlich repräsentierenden Diagnosewerts werden die ermittelte erste Zeitkonstante, Tₛₕₒᵣₜ, mit einem vorgegebenen ersten Referenzwert, T_{1ref}, und/oder die ermittelte zweite Zeitkonstante, Tᵣₑᵥ + Tₛₕₒᵣₜ, mit einem vorgegebenen zweiten Referenzwert, T_{2ref}, entsprechend verglichen.

Gemäß einer Ausgestaltung der Erfindung ist vorgesehen, daß die Meß- und Betriebsschaltung die Spulenanordnung während der Zeitspanne Tₛₕₒᵣₜ kurzschließt. Alternativ wird vorgeschlagen, daß die Meß- und Betriebsschaltung die Richtung des durch die Spulenanordnung fließenden Stroms während der Zeitspanne tₛₕₒᵣₜ wieder umkehrt.

Gemäß einer weiteren Ausgestaltung der Erfindung ist vorgesehen, daß die Meß- und Betriebsschaltung die Zeitspanne tₛₕₒᵣₜ so bemißt, daß der durch die Spulenanordnung fließende Erregerstrom nach Ablauf der Zeitspanne tₛₕₒᵣₜ zumindest näherungsweise den konstanten Strom-Endwert, I_{c}, erreicht hat.

## Patentansprüche

1. Verfahren zum Überprüfen eines magnetisch-induktiven Durchflußmessers mit einem Meßrohr zum Führen eines zu messenden Fluids und mit einem Magnetfeld-System, das wenigstens eine zumindest zeitweise von einem Erregerstrom (I_{M}) durchflossene Feldspule zum Erzeugen eines das Fluid zumindest teilweise senkrecht zu einer Strömungsrichtung durchsetzenden Magnetfelds aufweist, welches Verfahren folgende Schritte umfaßt:
- Ändern einer den Erregerstrom (I_{M}) treibenden Spannung (U_{H}) zu einem ersten Zeitpunkt, t₁, von einer momentanen ersten Spannungshöhe, U_{cont}. auf eine zweite Spannungshöhe, U_{drv}, zum Erhöhen einer Stromstärke, I, des von der Spannung (U_{H}) getriebenen und in der wenigstens einen Feldspule fließenden Erregerstroms (I_{M}) auf einen maximalen Stromwert, Iₘ, wobei die zweite Spannungshöhe, U_{drv}, größer gewählt wird als die erste Spannungshöhe, U_{cont}.
- Ändern der den Erregerstrom (I_{M}) momentan treibenden Spannung (U_{H}) zu einem zweiten Zeitpunkt, t₂, von der zweiten Spannungshöhe, U_{drv}, auf eine dritte Spannungshöhe, zum Absenken des Stromstärke des momentan in der wenigstens einen Feldspule fließenden Erregerstroms (I_{M}) vom maximalen Stromwert, auf einen für den Erregerstrom (I_{M}) vorgegebenen Strom-Endwert, I_{cont}, wobei die dritte Spannungshöhe, kleiner gewählt wird als die zweite Spannunghöhe, U_{drv},
- Erfassen des Erregerstroms (I_{M}) zumindest zeitweise zum Ermitteln eines dritten Zeitpunktes, t₃, der mit einem Erreichen des Strom-Endwerts, I_{cont}, korrespondiert,
- Ermitteln einer ersten Zeitkonstante, tₛₕₒᵣₜ = t₃ - t₂, für das Magnetfeld-System, die mit einer zwischen dem zweiten Zeitpunkt, t₂, und dem dritten Zeitpunkt, t₃, liegenden Zeitspanne, t₃-t₂, korrespondiert, und Vergleichen der Ermittelten ersten Zeitkonstante, tₛₕₒᵣₜ, mit einem vorgegebenen ersten Referenzwert, t_{1ref}, zum Ermitteln eines einen momentanen Betriebszustand des Durchflußmessers repräsentierenden Diagnosewerts, und/oder
- Ermitteln einer zweiten Zeitkonstante, tᵣₑᵥ + tₛₕₒᵣₜ = t₃ - t₁, für das Magnetfeld-System, die mit einer zwischen dem ersten Zeitpunkt, t₁, und dem dritten Zeitpunkt, t₃, liegenden Zeitspanne, t₃-t₁, korrespondiert, und Vergleichen der Ermittelten zweiten Zeitkonstante, tᵣₑᵥ + tₛₕₒᵣₜ, mit einem vorgegebenen zweiten Referenzwert, t_{2ref}, zum Ermitteln eines einen momentanen Betriebszustand des Durchflußmessers repräsentierenden Diagnosewerts.

2. Verfahren nach dem vorherigen Anspruch, wobei die dritte Spannungshöhe, kleiner gewählt ist als die erste Spannunghöhe, U_{cont}.

3. Verfahren nach einem der vorherigen Ansprüche, wobei die den Erregerstrom (I_{M}) zumindest zeitweise treibende Spannung (U_{H}) derart geändert wird, daß deren zweite Spannungshöhe, U_{drv}, während einer zwischen dem ersten Zeitpunkt, t₁, und dem zweiten Zeitpunkt, t₂, liegenden Zeitspanne, t₂-t₁, zumindest zeitweise, insb. auch unmittelbar vor dem zweiten Zeitpunkt, im wesentlichen konstant ist.

4. Verfahren nach einem der vorherigen Ansprüche, wobei wenigstens eine Feldspule der Spulenanordnung zum Einstellen der Spannung (U_{H}) auf die dritte Spannungshöhe, zumindest zeitweise kurzgeschlossen wird.

## Claims

1. Procedure for checking an electromagnetic flowmeter with a measuring tube for conducting a fluid to be measured and with a magnetic field system that has at least one field coil, through which an excitation current (I_{M}) flows at least temporarily, designed to generate a magnetic field passing through the fluid at least partly perpendicularly to a flow direction, said procedure comprising the following steps:
- Change of a voltage (U_{H}) that generates the excitation current (I_{M}) at a first time, t₁, from a momentary first voltage level, U_{cont}, to a second voltage level, U_{drv}, with a view to increasing a force, I, of the excitation current (I_{M}) which is generated by the voltage (U_{H}) and flows through the at least one field coil to a maximum current value, Iₘ, wherein the second voltage level, U_{drv}, is selected to be higher than the first voltage level, U_{cont},
- Change of the voltage (U_{H}) currently generating the excitation current (I_{M}) at a second time, t₂, from the second voltage level, U_{drv}, to a third voltage level with a view to reducing the force of the excitation current (I_{M}) which is currently flowing in the at least one field coil from a maximum current value to a current end value, I_{cont}, specified for the excitation current (I_{M}), wherein the third voltage level is selected to be lower than the second voltage level U_{drv},
- Measurement of an excitation current (I_{M}) at least intermittently to determine a third time, t₃, that corresponds to when the current end value, I_{cont}, is reached,
- Determination of a first time constant, tₛₕₒᵣₜ = t₃ - t₂, for the magnetic field system, which corresponds to a time span, t₃ - t₂, between the second time, t₂, and the third time, t₃, and comparison of the first time constant determined, tₛₕₒᵣₜ, with a predefined first reference value, t_{1ref}, with a view to determining a diagnostic value representing a momentary operating state of the flowmeter, and/or
- Determination of a second time constant, tᵣₑᵥ + tₛₕₒᵣₜ = t₃ - t₁, for the magnetic field system, which corresponds to a time span, t₃ - t₁, between the first time, t₁, and the third time, t₃, and comparison of the second time constant determined, tᵣₑᵥ + tₛₕₒᵣₜ, with a predefined second reference value, t_{2ref}, with a view to determining a diagnostic value representing a momentary operating state of the flowmeter.

2. Procedure as claimed in the previous claim, wherein the third voltage level is selected to be lower than the first voltage level U_{cont}.

3. Procedure as claimed in one of the previous claims, wherein the voltage (U_{H}) that at least temporarily generates the excitation current (I_{M}) is modified in such a way that the second voltage level, U_{drv}, is essentially constant during a time interval, t₂-t₁, between the first time, t₁, and the second time, t₂, at least temporarily, particularly immediately before the second time.

4. Procedure as claimed in one of the previous claims, wherein at least one field coil of the coil arrangement is short-circuited at least temporarily to set the voltage (U_{H}) to the third voltage level.

## Revendications

1. Procédé destiné au contrôle d'un débitmètre magnéto-inductif avec un tube de mesure destiné au guidage d'un fluide à mesurer et avec un système de champ magnétique, qui présente au moins une bobine excitatrice parcourue au moins temporairement par un courant d'excitation (I_{M}) destinée à générer un champ magnétique traversant au moins partiellement le fluide perpendiculairement au sens d'écoulement du fluide, lequel procédé comprend les étapes suivantes :
- Changement d'une tension (U_{H}) générant le courant d'excitation (I_{M}) en un premier instant, t₁, d'un premier niveau de tension momentané, U_{cont}, à un deuxième niveau de tension, U_{drv}, en vue de l'augmentation d'une intensité, I, du courant d'excitation (I_{M}) généré par la tension (U_{H}) et circulant dans l'au moins une bobine excitatrice, à une valeur de courant maximale, Iₘ, le deuxième niveau de tension, U_{drv}, étant choisi plus grand que le premier niveau de tension, U_{cont},
- Changement d'une tension (U_{H}) générant momentanément le courant d'excitation (I_{M}) en un deuxième instant, t₂, du deuxième niveau de tension, U_{drv}, à un troisième niveau de tension en vue de la diminution de l'intensité du courant d'excitation (I_{M}) circulant momentanément dans l'au moins une bobine excitatrice, par rapport à la valeur de courant maximale, à une valeur finale de courant, I_{cont}, prédéfinie pour le courant d'excitation (I_{M}), le troisième niveau de tension étant choisi plus petit que le deuxième niveau de tension, U_{drv},
- Mesure du courant d'excitation (I_{M}) au moins temporairement pour déterminer un troisième instant, t₃, qui correspond à l'atteinte de la valeur finale de courant, I_{cont},
- Détermination d'une première constante de temps, tₛₕₒᵣₜ = t₃ - t₂, pour le système de champ magnétique, laquelle correspond à l'intervalle de temps, t₃ - t₂, situé entre le deuxième instant, t₂, et le troisième instant, t₃, et comparaison de la première constante de temps déterminée, tₛₕₒᵣₜ, avec une première valeur de référence prédéfinie, t_{1ref}, en vue de la détermination d'une valeur de diagnostic représentant momentanément l'état de fonctionnement du débitmètre, et/ou
- Détermination d'une deuxième constante de temps, tᵣₑᵥ + tₛₕₒᵣₜ = t₃ - t₁, pour le système de champ magnétique, laquelle correspond à l'intervalle de temps, t₃ - t₁, situé entre le premier instant, t₁, et le troisième instant, t₃, et comparaison de la deuxième constante de temps déterminée, tᵣₑᵥ + tₛₕₒᵣₜ, avec une deuxième valeur de référence prédéfinie, t_{2ref}, en vue de la détermination d'une valeur de diagnostic représentant momentanément l'état de fonctionnement du débitmètre.

2. Procédé selon la revendication précédente, pour lequel le troisième niveau de tension est choisi plus petit que le premier niveau de tension, U_{cont}.

3. Procédé selon l'une des revendications précédentes, pour lequel la tension (U_{H}) générant au moins temporairement le courant d'excitation (I_{M}) est modifiée de telle manière que son deuxième niveau de tension, U_{drv}, est pour l'essentiel constant pendant un intervalle de temps, t₂-t₁, situé entre le premier instant, t₁, et le deuxième instant, t₂, au moins temporairement, notamment également immédiatement avant le deuxième instant.

4. Procédé selon l'une des revendications précédentes, pour lequel au moins une bobine excitatrice de la configuration de bobines est court-circuitée au moins temporairement pour le réglage de la tension (U_{H}) au troisième niveau de tension.
